# EUROPEAN PATENT SPECIFICATION

(11) **EP 0 480 324 B1**
(45) Date of publication and mention of the grant of the patent: **29.05.1996**
(21) Application number: 91116953.0
(22) Date of filing: 04.10.1991
(51) Int. Cl.: G11B 5/31

(54) **Thin film magnetic head**
Dünnfilmmagnetkopf
Tête magnétique en films minces

(30) Priority: 12.10.1990 JP 274513/90
(43) Date of publication of application: 15.04.1992
(73) Proprietor: FUJITSU LIMITED, Kawasaki-shi, Kanagawa 211 (JP)
(72) Inventor: Kanai, Hitoshi, c/o Fujitsu Ltd. Patent Dept., Kawasaki-shi, Kanagawa 211 (JP); Kanamine, Michiaki, c/o Fujitsu Ltd. Patent Dept., Kawasaki-shi, Kanagawa 211 (JP); Kobayashi, Kazuo, c/o Fujitsu Ltd. Patent Dept., Kawasaki-shi, Kanagawa 211 (JP)
(74) Representative: Stebbing, Timothy Charles

(56) References cited:
- EP-A- 0 353 911
- WO-A-89/05505
- US-A- 4 944 805
- IBM TECHNICAL DISCLOSURE BULLETIN. vol. 19, no. 8, January 1977, ARMONK NEW YORK US pages 3234 - 3235 D.A. THOMPSON & E. P. VALSTYN 'Laminated films with alternately skewed axis for magnetic
- transducers'
- IBM JOURNAL OF RESEARCH AND DEVELOPMENT vol. 34, no. 6, November 1990, ARMONK, NEW YORK US pages 884 - 901 , XP000264890 V.S. SPERIOSU ET AL. 'Magnetic thin films in recording technology'
- P.Ciureanu, H.Gavrila Magnetic Heads for Digital Recording 1990, p.505-510.

## Description

The present invention relates to a thin film magnetic head, and more particularly to a composition of a thin film magnetic head used for magnetic disk apparatus in a computer system.

With the trend toward higher recording density and larger storage capacity of magnetic disk apparatus, a thin film magnetic head used therein is required to have high reliability and high performance in operation.

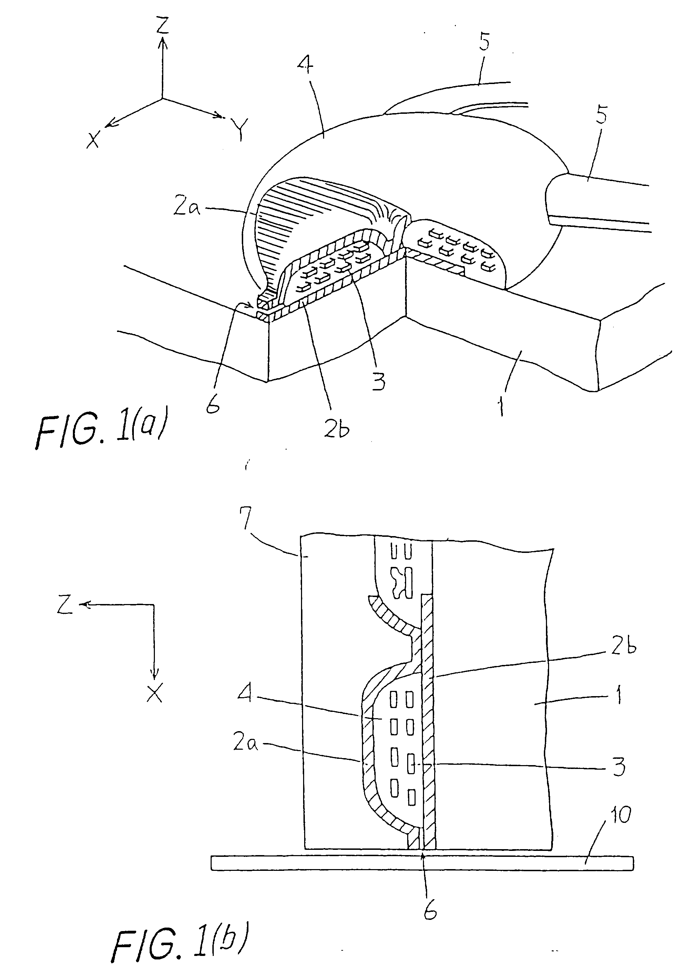

Fig. 1(a) is a perspective view of a thin film magnetic head, a portion of which is cut away for ease of understanding, and Fig. 1(b) is a cross-sectional view. A substrate 1 is of a ceramic material such as Al₂O₃TiC. On substrate 1, a magnetic circuit is formed, which is composed of two magnetic films 2, namely an upper magnetic film 2a and a lower magnetic film 2b. The magnetic films are shaped in such a manner that at one end they taper to form narrow portions separated by a small gap 6, whilst at their other ends they contact each other. Each of the magnetic films 2a and 2b is a single layer of permalloy formed by deposition or plating.

A thin film coil 3 of copper is formed by plating and patterning before forming the upper magnetic film 2a, and the coil 3 is buried in an insulation layer 4 of thermosetting resin material so as to be insulated from the magnetic films. The coil 3 surrounds the contacting portion of the magnetic films 2. The magnetic films 2 form a yoke of a magnetic circuit and the coil 3 interlinks the magnetic circuit. The coil 3 is provided with two thin-film lead wires 5 which are formed simultaneously with the coil 3 by copper plating. The gap 6 between the ends (poles) of the magnetic films is buried in a sputtered aluminium oxide (Al₂O₃) layer, and the entire surface is covered with a protective layer 7 (not shown in Fig. 1(a)). The magnetic head is arranged close to a recording medium 10 of a disk apparatus during write and read operations.

In a write operation, an electrical current corresponding to write information is input from the lead wires 5 and flows through the coil 3, thereby generating a leakage flux at the gap 6, which magnetises the rotating recording medium 10. In a read operation, recorded information on the magnetic recording medium 10 induces magnetic flux in the magnetic circuit of the magnetic films 2, which flux in turn induces a signal in the coil 3 interlinked with the magnetic flux.

With reference to the orthogonal co-ordinate system illustrated in Figs. 1(a) and 1(b), it is generally known that, during fabrication of the magnetic films, a magnetic anisotropy (easy axis of magnetisation) is preferably provided in the Y-direction, because this enhances a permeability of the magnetic film in the X-direction (hard axis of magnetisation), coincident with the flux direction induced during write and read operations. In principle this should result in a magnetic head having a good write and read performance.

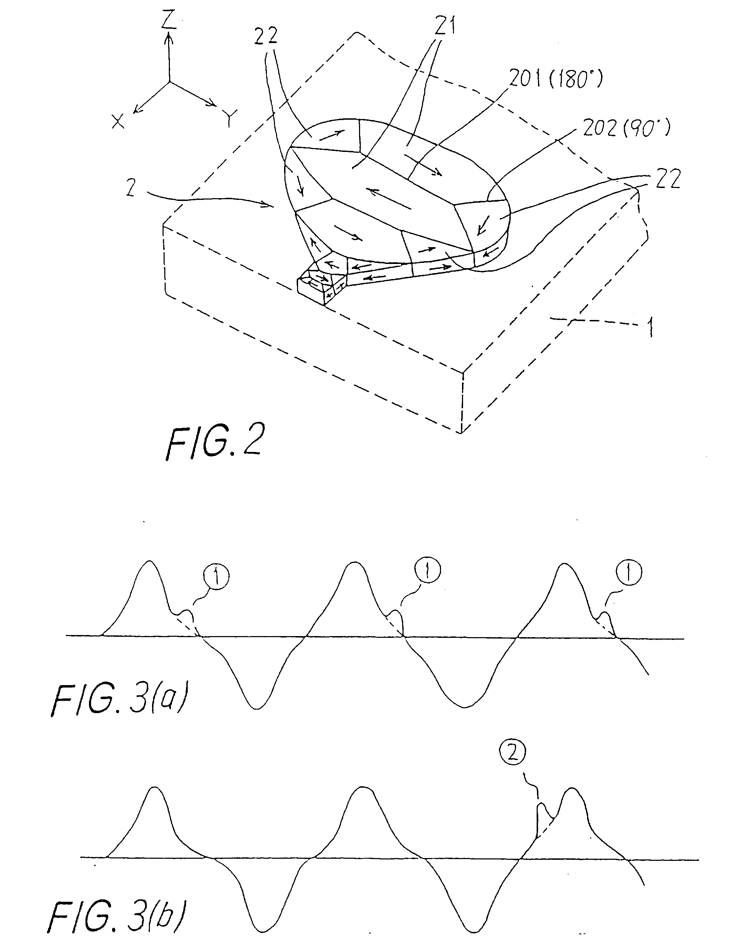

However, in actual fabrication, the completed thin magnetic film does not show a simple pattern of magnetisation. Fig. 2 illustrates an example of a pattern of magnetisation in which only a magnetic film 2 is shown on the substrate 1 and other parts are removed for the sake of simplicity. A plurality of magnetic domains are formed divided by domain walls, each domain having a different direction of magnetisation. The reasons for this are that the magnetic film has a finite length in the Y-direction, which causes a demagnetisation field in the magnetic film and that, in order to reduce the magnetostatic energy caused by the demagnetisation field, flux closure domains are generated in the magnetic film. As a result, flux closure domains 22 in Fig. 2 are formed in which the direction of magnetisation is perpendicular to those of the main domains 21. In other words, when an external magnetic field is removed, magnetic domains are formed whose directions of magnetisation form a closed contour (path). A 180° domain wall 201 is formed between adjacent main domains 21, and a 90° domain wall is formed between flux closure domain 22 and a main domain 21.

When a thin film magnetic head of the above type has a signal magnetic flux applied to it, rotation of magnetisation occurs in the main domain 21 and moreover the domain wall 202 defining closure domain 22 deforms or moves. There is no definite relationship between the movement of the domain wall and the applied magnetic field. If there is a phase difference between the signal flux and the domain wall movement, the reproduced signal contains so-called "wiggle" noise. In another case, if domain wall movement is restricted by a defect or impurity in the magnetic substance, the domain wall may suddenly move, which generates so-called "popcorn" noise in the reproduced signal.

Figs. 3(a) and 3(b) show examples of a reproduced signal waveform from the above type of magnetic head. "Wiggles" are observed in a trailing portion of the waveform in Fig. 3(a), and "popcorn" is observed in a random portion of the waveform in Fig. 3(b).

In order to reduce "popcorn" noise, Japanese Unexamined Patent Publication Tokukai-Hei 2-312005 discloses a heat-treatment method, in which a magnetic head subassembly composed of magnetic films, a coil, etc., is subjected to a heat treatment at 270 to 400°C before forming a protective layer 7 (shown in Fig. 1(b)). However, it has been found that this method cannot always eliminate such noise. For example, when a permalloy (NiFe) layer is used as the magnetic film and its magnetostriction coefficient λ is positive, noise reduction cannot be expected. When an amorphous cobalt alloy layer is used as the magnetic film, neither heat treatment nor a combination of heat treatment and in-plane (hereinafter used to denote the parallel direction to the XY plane) magnetic anisotropy can remove "popcorn" noise.

It is desirable, therefore, to provide a thin film magnetic head which will not produce spurious and transient noise pulses such as "wiggle" and "popcorn" noise in a reproduced signal during a read operation.

It is also desirable to provide a thin film magnetic head having high performance and high reliability.

EP-A-0 353 911 discloses a magnetic head according to the preamble of accompanying claim 1. The magnetic films of this head have magnetic domains in a stripe pattern arranged substantially parallel to the Y-axis in an orthogonal co-ordinate system where the magnetic films lie in the XY plane, and the X-axis is coincident with a centre line dividing the films into two symmetrical parts. Thereby the formation of contour domains in the XY plane is avoided.

According to the present invention there is provided a magnetic head comprising a substrate, upper and lower magnetic films forming a magnetic circuit on the substrate, and a coil surrounding the magnetic circuit and located between the upper and lower magnetic films; characterised in that the magnetic films have both an in-plane magnetic anisotropy, parallel to the magnetic film surface, and a perpendicular magnetic anisotropy, perpendicular to the magnetic film surface.

An embodiment of the present invention can provide a magnetic head having reduced susceptibility to spurious and transient noise pulses in a reproduced signal during a read operation, and which therefore is useful for applications requiring high reliability.

Reference is made, by way of example, to the accompanying drawings in which:-
Figs. 1(a) and 1(b) are respectively a perspective view and a sectional view of a magnetic head to which the present invention may be applied;
Fig. 2 shows schematically a magnetic domain structure in a prior art magnetic film;
Figs. 3(a) and 3(b) illustrate reproduced signal waveforms from a prior art magnetic head;
Fig. 4 shows a magnetic domain structure of a magnetic film embodying the present invention;
Fig. 5 is a graph showing a relationship between heat treatment temperature for different magnetostriction coefficients λ, and noise data;
Fig. 6 is a graph showing a relationship between Hv/Hp and noise data;
Fig. 7 is a graph showing a relationship between λ x σ and Hv/Hp;
Fig. 8 is a time chart for steps of a noise test, in which (a) shows a write current applied to a coil of a magnetic head, (b) shows detected "popcorn" noise, and (c) shows a detection signal; and
Figs. 9(a) and 9(b) show a BH curve of a CoZrCr magnetic film with regard to a hard axis direction, in which Fig. 9(a) relates to a magnetic film having no perpendicular magnetic anisotropy and Fig. 9(b) relates to an embodiment of the present invention.

Throughout the drawings, the same reference numerals designate and identify the same or similar parts; also, the same orthogonal co-ordinate system is used for denoting directions with regard to a magnetic film.

An embodiment of the present invention has no particular structural difference from the structure described with reference to Figs. 1(a) and 1(b), and therefore the same reference numerals are used in the following description and detailed explanation of the structure is omitted. Particular features of the invention relate to magnetic anisotropy given to the magnetic films. An improved magnetic head can be realised by giving a perpendicular magnetic anisotropy to the magnetic films together with an in-plane magnetic anisotropy, as will become clear from the following explanation.

### (1) First Embodiment

In a first embodiment of the present invention, a perpendicular (Z-axis) magnetic anisotropy is given to the magnetic films 2 by utilising a magnetostriction effect, and particularly in this embodiment, an inverse magnetostriction effect is utilised. Below, the term "magnetic film(s)" is used to denote both upper and lower magnetic films 2a and 2b, and each magnetic film is a single layer of magnetic material (see Fig. 1(a)).

During a step of forming the permalloy magnetic film by sputtering or plating, a magnetic field is applied in the Y-direction, and the proportion of nickel (Ni) contained in the permalloy (NiFe) film is controlled such that a magnetostriction coefficient λ is kept negative.

When the magnetic film is formed by a sputtering or plating process, tensile stress is generated in the plane of the magnetic film (particularly in the X-direction) and, as a result, a perpendicular anisotropy (Z-direction anisotropy) arises in the magnetic film due to an inverse magnetostriction effect.

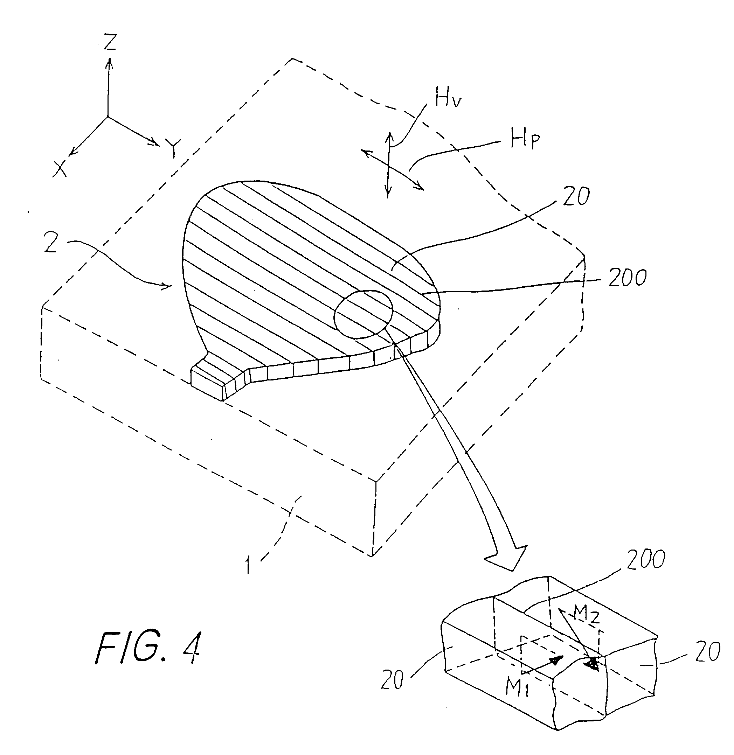

Fig. 4 shows a magnetic domain configuration of the magnetic film in accordance with this embodiment, shown partly enlarged. In the Figure, Hp and Hv denote a direction of an in-plane magnetic anisotropy and a perpendicular magnetic anisotropy respectively. A plurality of parallel magnetic domains are formed divided by parallel domain walls. Magnetisations in two adjacent domains 20 are shown by arrows M₁ and M₂ in the enlarged view as examples and, as shown, each has both in-plane (Y-direction) and perpendicular (Z-direction) components of magnetic anisotropy. The above domain structure has been confirmed by the known Bitter method and'by observation of the Kerr effect. The magnetisation of each domain has a perpendicular component whose direction is opposite to the perpendicular component of the adjacent magnetic domains. Magnetisation in two adjacent domains, each having a width (in the X-direction) of about 2 µm, are formed as if they form a closed magnetic path. Therefore, contour domains 22 such as shown in Fig. 2 can be avoided.

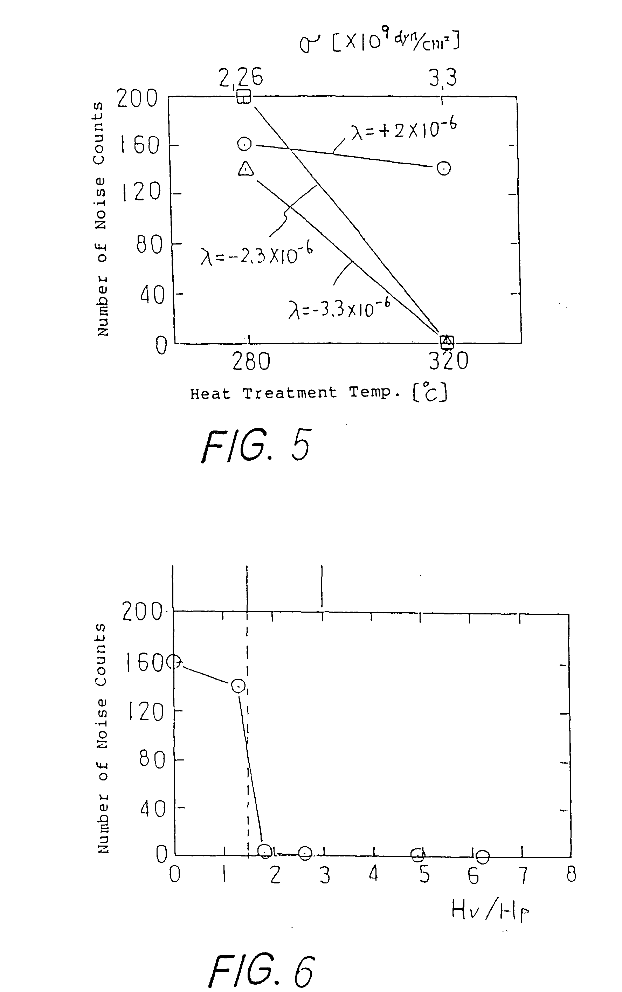

It has been found that there is a difference in noise properties depending on the forming conditions of the magnetic film such as the permalloy composition, forming temperature, etc. Fig. 5 shows the amount of measured "popcorn" noise versus temperature during a sputtering or plating process of the magnetic film. When the forming temperature is changed, a stress generated in the magnetic film also changes. The measured stress amount corresponding to the temperature data is shown on the upper side of the abscissa in Fig. 5. The stress generated in a magnetic film subjected to a heat-treatment is a tensile force, therefore it has a positive value. In Fig. 5, graphs for three values of the magnetostriction constant λ are shown, showing the effect of changing the content of nickel (Ni) in the permalloy. When the Ni content exceeds about 83.4%, λ becomes negative, and when the Ni content is less than 83.4% λ becomes positive. As can be seen from Fig. 5, the noise cannot be greatly reduced with a positive value of the parameter λ; however, the noise count for two different negative parameter values shows a rapid decrease with temperature rise. Therefore, it is preferable to use permalloy having an Ni content greater than about 83.4% in this embodiment.

Fig. 6 shows the variation in noise when the ratio of perpendicular anisotropy Hv to in-plane anisotropy Hp is changed. In the region of Hv/Hp < 1.5, the perpendicular anisotropy Hv is not sufficient to reduce the noise. In order to reduce noise, the perpendicular anisotropy should satisfy the condition of Hv/Hp > 1.5.

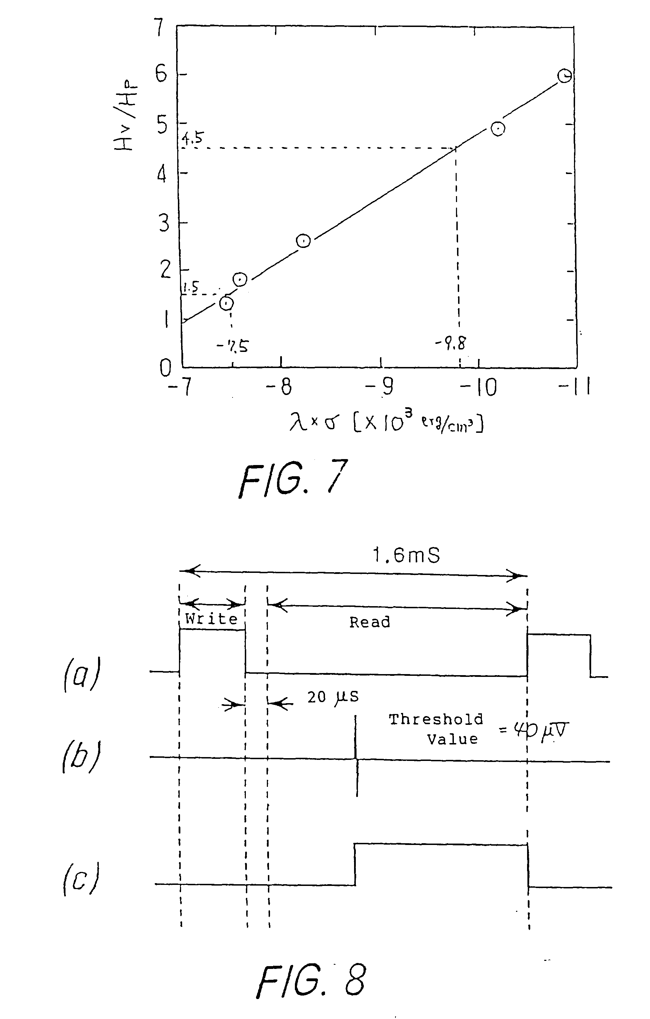

Combining the data of Figs. 5 and 6, the necessary condition of Hv/Hp > 1.5 can be rewritten in the form λ x σ, which is shown in Fig. 7. The necessary condition of Hv/Hp > 1.5 corresponds to λ x σ < -7.5 x 10³ erg/cm³ (-750 µJ/cm³).

The noise data shown in Figs. 5 and 6 is the number of detected counts (occurrences) of "popcorn" noise over 6,250 cycles of a write and read (detection) test. Fig. 8 illustrates schematically a time chart of a single test cycle. In Fig. 8, waveform trace (a) shows a write current applied to a coil of magnetic head, the write cycle having a 1.6 ms period. A read period for noise begins after a 20 µs pause time and continues until the next write period. Any "popcorn" noise greater than a threshold value of 40 µV is detected as shown by trace (b) and generates a signal (c) for a counter circuit.

When tests for "wiggle" noise are also performed, it is found that the "wiggle" noise is also greatly reduced in the present embodiment.

### (2) Second Embodiment

A second embodiment of the present invention utilises cobalt alloy for forming the magnetic films 2. The magnetic film is formed by sputtering cobalt alloy such as CoZrCr, CoZr, CoZrNb and CoZrMo, and in addition a magnetic field is applied in the Y-direction during the sputtering process. After fabrication of two magnetic films 2b and 2a in this way, the finished subassembly is subjected to a heat treatment at a temperature higher than 250°C, whilst simultaneously applying a magnetic field in the Z-direction (perpendicular to the film surface) having a strength of a few hundreds Oe (a few tens kAm⁻¹).

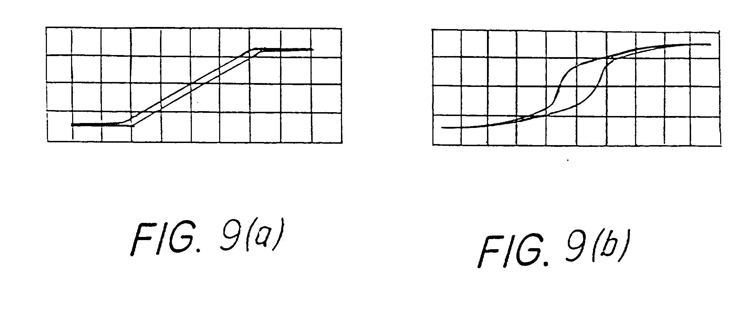

The completed head assembly is tested for a BH characteristic in a hard axis direction (X-direction). Fig. 9(a) shows the BH curve for a magnetic head produced without applying a Z-direction magnetic field during the above heat treatment, and Fig. 9(b) shows the same thing when the Z-direction magnetic field is applied. The BH curve of Fig. 9(a) has a desirable shape, considering the magnetic characteristic of the magnetic head in isolation; however, the noise characteristic is unsatisfactory. The BH curve of Fig. 9(b) in accordance with the second embodiment of the invention clearly shows that a perpendicular magnetic anisotropy (perpendicular to the magnetic film surface) is induced in the magnetic films (induced magnetic anisotropy). The magnetic heads have been tested and found to have an improved noise characteristic as in the first embodiment.

### (3) Third Embodiment

A third embodiment of the present invention utilises a perpendicular magnetic anisotropy which appears in a crystalline structure of magnetic material. Permalloy (NiFe alloy) has a face-centred cubic crystalline structure, and its anisotropy constant K is negative. Therefore, the crystalline magnetic anisotropy appears in the direction [111] of the permalloy crystal structure. When a permalloy film is formed in such a way that the perpendicular to the film surface is coincident with the [111] direction, the film is given a perpendicular magnetic anisotropy (Z-direction) which reduces the occurrence of spurious and transient noise in the reproduced signal from the magnetic head.

In an actual fabrication method, permalloy films are first formed by a sputtering or plating process, and the head subassembly thus formed is then subjected to a heat treatment above 300°C. This results in recrystallising the permalloy films so as to give them the desired crystalline magnetic anisotropy, namely with an anisotropic direction coincident with the perpendicular to the film surface.

Throughout the first to the third embodiments, it is a common feature that the magnetic head comprises a magnetic film having a perpendicular magnetic anisotropy together with an in-plane magnetic anisotropy. Magnetic domains in the magnetic film have a tendency to form a closed path of magnetisation by movements of the neighbouring magnetic domains. The closed path is formed not only in the surface direction of the magnetic film but also in the thickness direction thereof. The magnetic structure in the thickness direction shows a fine changing domain structure, which avoids the occurrence of large flux contour domains in the XY-plane, such as that labelled 22 in Fig. 2.

Since flux contour domains are considered to be the cause of "popcorn" noise and "wiggle" noise in a reproduced signal, a magnetic head without such domains embodying the present invention, is less susceptible to such noise, and therefore has high quality and high reliability.

## Claims

1. A magnetic head comprising a substrate (1), upper and lower magnetic films (2, 2a, 2b) forming a magnetic circuit on the substrate, and a coil (3) surrounding the magnetic circuit and located between the upper and lower magnetic films (2, 2a, 2b);
characterised in that said magnetic films (2, 2a, 2b) have both an in-plane magnetic anisotropy (Hp), parallel to the magnetic film surface, and a perpendicular magnetic anisotropy (Hv), perpendicular to the magnetic film surface.

2. A magnetic head as claimed in claim 1, wherein the direction of said in-plane magnetic anisotropy (Hp) is coincident with the Y-direction in an orthogonal co-ordinate system, where the magnetic films (2, 2a, 2b) lie in the XY plane and the X-axis is coincident with a line dividing the magnetic film surface into two symmetrical parts.

3. A magnetic head as claimed in claim 2, wherein said magnetic films (2, 2a, 2b) have a plurality of magnetic domains (20), each magnetic domain having a stripe shape and arranged substantially parallel to the Y-axis, whereby formation of contour domains in the XY plane is avoided.

4. A magnetic head as claimed in claim 3, wherein the perpendicular magnetic anisotropy components of neighbouring magnetic domains (20) have opposite directions.

5. A magnetic head as claimed in any preceding claim, wherein said perpendicular magnetic anisotropy (Hv) is greater than 1.5 times said in-plane magnetic anisotropy (Hp).

6. A magnetic head as claimed in any preceding claim, wherein the magnetic films (2, 2a, 2b) are made of NiFe alloy, and said perpendicular magnetic anisotropy (Hv) is given by an inverse magnetostriction effect, a product of a magnetostriction coefficient (λ) of the magnetic film and a stress (σ) applied thereto being less than -7.5 x 10³ erg/cm³ (-750 µJ/cm³) .

7. A magnetic head as claimed in any of claims 1 to 5, wherein the magnetic films (2, 2a, 2b) are made of cobalt alloy, and said perpendicular magnetic anisotropy (Hv) is an induced magnetic anisotropy produced by applying a magnetic field perpendicular to the magnetic film surface.

8. A magnetic head as claimed in any of claims 1 to 5, wherein the magnetic films (2, 2a, 2b) are made of NiFe alloy, and said perpendicular magnetic anisotropy (Hv) is a crystalline magnetic anisotropy produced by forming the magnetic films such that the perpendicular thereto is coincident with the [111] axis of the NiFe crystalline structure.

9. A magnetic head as claimed in claim 6, wherein the nickel content of said NiFe alloy is greater than about 83.4%.

10. A magnetic head as claimed in claim 7, wherein said cobalt alloy is selected from CoZrCr, CoZr, CoZrNb and CoZrMo.

11. A magnetic head as claimed in claim 8, wherein the magnetic films (2, 2a, 2b) are formed by depositing/plating NiFe alloy and thereafter recrystallising the NiFe layer.

12. A magnetic head as claimed in any preceding claim, wherein each of the upper and lower magnetic films (2, 2a, 2b) is a single layer of magnetic material.

13. A magnetic head as claimed in any preceding claim, wherein the magnetic films (2, 2a, 2b) are shaped so as to form a narrow portion with a gap (6) at an end of the magnetic circuit for interacting with a recording medium, and wherein said coil (3) is buried in an insulation layer (4) provided between the upper and lower magnetic films.

## Patentansprüche

1. Ein Magnetkopf, umfassend ein Substrat (1), obere und untere Magnetfilme (2, 2a, 2b), die einen magnetischen Kreis auf dem Substrat bilden, und eine Wicklung (3), die den magnetischen Kreis umgibt und sich zwischen den oberen und unteren Magnetfilmen (2, 2a, 2b) befindet;
dadurch gekennzeichnet, daß die Magnetfilme (2, 2a, 2b) sowohl eine magnetische Anisotropie (Hp) in der Ebene, parallel zu der Magnetfilmoberfläche, als auch eine senkrechte magnetische Anisotropie (Hv), senkrecht zu der Magnetfilmoberfläche, aufweisen.

2. Ein Magnetkopf nach Anspruch 1, worin die Richtung der magnetischen Anisotropie (Hp) in der Ebene mit der Y-Richtung in einem orthogonalen Koordinatensystem übereinstimmt, wo die Magnetfilme (2, 2a, 2b) in der XY-Ebene liegen und die X-Achse mit einer die Magnetfilmoberfläche in zwei symmetrische Teile teilenden Linie übereinstimmt.

3. Ein Magnetkopf nach Anspruch 2, worin die Magnetfilme (2, 2a, 2b) eine Vielzahl magnetischer Domänen (20) aufweisen, jede magnetische Domäne eine Streifenform aufweisend und im wesentlichen parallel zu der Y-Achse angeordnet, wodurch eine Bildung von Konturdomänen in der XY-Ebene vermieden wird.

4. Ein Magnetkopf nach Anspruch 3, worin die senkrechten magnetischen Anisotropiekomponenten benachbarter magnetischer Domänen (20) entgegengesetzte Richtungen haben.

5. Ein Magnetkopf nach irgendeinem vorhergehenden Anspruch, worin die senkrechte magnetische Anisotropie (Hv) größer als das 1,5-fache der magnetischen Anisotropie (Hp) in der Ebene ist.

6. Ein Magnetkopf nach irgendeinem vorhergehenden Anspruch, worin die Magnetfilme (2, 2a, 2b) aus einer NiFe-Legierung hergestellt sind und die senkrechte magnetische Anisotropie (Hv) durch einen inversen Magnetostriktionseffekt gegeben ist, wobei ein Produkt eines Magnetostriktionskoeffizienten (λ) des Magnetfilms und einer Beanspruchung (σ), die darauf angewandt wird, geringer als -7,5 x 10³ erg/cm³ (-750 µJ/cm³) ist.

7. Ein Magnetkopf nach irgendeinem der Ansprüche 1 bis 5, worin die Magnetfilme (2, 2a, 2b) aus einer Kobaltlegierung hergestellt sind und- die senkrechte magnetische Anisotropie (Hv) eine induzierte magnetische Anisotropie ist, die durch Anlegen eines zu der Magnetfilmoberfläche senkrechten Magnetfeldes erzeugt wird.

8. Ein Magnetkopf nach irgendeinem der Ansprüche 1 bis 5, worin die Magnetfilme (2, 2a, 2b) aus einer NiFe-Legierung hergestellt sind und die senkrechte magnetische Anisotropie (Hv) eine kristalline magnetische Anisotropie ist, die durch Bilden der Magnetfilme erzeugt wird, so daß die Senkrechte dazu mit der [111]-Achse der NiFe-Kristallstruktur übereinstimmt.

9. Ein Magnetkopf nach Anspruch 6, worin der Nickelgehalt der NiFe-Legierung größer als etwa 83,4 % ist.

10. Ein Magnetkopf nach Anspruch 7, worin die Kobaltlegierung aus CoZrCr, CoZr, CoZrNb und CoZrMo ausgewählt ist.

11. Ein Magnetkopf nach Anspruch 8, worin die Magnetfilme (2, 2a, 2b) durch Ablagern/Galvanisieren einer NiFe-Legierung und anschließendes Rekristallisieren der NiFe-Schicht gebildet werden.

12. Ein Magnetkopf nach irgendeinem vorhergehenden Anspruch, worin jeder der oberen und unteren Magnetfilme (2, 2a, 2b) eine einfache Schicht eines magnetischen Materials ist.

13. Ein Magnetkopf nach irgendeinem vorhergehenden Anspruch, worin die Magnetfilme (2, 2a, 2b) geformt sind, um einen schmalen Teil mit einer Lücke (6) bei einem Ende des magnetischen Kreises zum Wechselwirken mit einem Aufzeichnungsmedium zu bilden, und worin die Wicklung (3) in einer zwischen den oberen und unteren Magnetfilmen vorgesehenen Isolationsschicht (4) beerdigt ist.

## Revendications

1. Tête magnétique comprenant un substrat (1), des couches magnétiques supérieure et inférieure (2, 2a, 2b) formant un circuit magnétique sur le substrat, et une bobine (3) entourant le circuit magnétique et située entre les couches magnétiques supérieure et inférieure (2, 2a, 2b) ;
caractérisée en ce que lesdites couches magnétiques (2, 2a, 2b) ont à la fois une anisotropie magnétique dans un plan (Hp) parallèle à la surface de la couche magnétique, et une anisotropie magnétique perpendiculaire (Hv) perpendiculaire à la surface de la couche magnétique.

2. Tête magnétique selon la revendication 1, dans laquelle la direction de ladite anisotropie magnétique dans un plan (Hp) coïncide avec la direction Y dans un système de coordonnée orthogonale, où les couches magnétiques (2, 2a, 2b) se trouvent dans le plan XY et l'axe X coïncide avec une ligne divisant la surface de la couche magnétique en deux parties symétriques.

3. Tête magnétique selon la revendication 2, dans lequel lesdites couches magnétiques (2, 2a, 2b) ont une pluralité de domaines magnétiques (20), chaque domaine magnétique ayant une forme de bande et disposé substantiellement parallèlement à l'axe Y, de sorte que la formation des domaines de contour dans le plan XY est évitée.

4. Tête magnétique selon la revendication 3, dans laquelle les composantes d'anisotropie magnétique perpendiculaires des domaines magnétiques voisins (20) ont des directions opposées.

5. Tête magnétique selon l'une quelconque des revendications précédentes dans laquelle ladite anisotropie magnétique perpendiculaire (Hv) est supérieure à 1,5 fois ladite anisotropie magnétique dans un plan (Hp).

6. Tête magnétique selon l'une quelconque des revendications précédentes, dans laquelle les couches magnétiques (2, 2a, 2b) sont faites d'alliage de NiFe, et ladite anisotropie magnétique perpendiculaire (Hv) est donnée par un effet de magnétostriction inverse, un produit d'un coefficient de magnétostriction (λ) de la couche magnétique et une contrainte (σ) appliquée à celle-ci étant inférieure à -7,5 x 10³ erg/cm³ (-750 µJ/cm³).

7. Tête magnétique selon l'une quelconque des revendications 1 à 5, dans laquelle les couches magnétiques (2, 2a, 2b) sont faites d'un alliage de cobalt, et ladite anisotropie magnétique perpendiculaire (Hv) est une anisotropie magnétique induite produite par application d'un champ magnétique perpendiculaire à la surface de la couche magnétique.

8. Tête magnétique selon l'une quelconque des revendications 1 à 5, dans laquelle les couches magnétiques (2, 2a, 2b) sont faites d'un alliage de NiFe, et ladite anisotropie magnétique perpendiculaire (Hv) est une anisotropie magnétique cristalline produite en formant les couches magnétiques de sorte que la perpendiculaire à celle-ci coïncide avec l'axe [111] de la structure cristalline de NiFe.

9. Tête magnétique selon la revendication 6, dans laquelle le contenu de nickel dudit alliage de NiFe est supérieur à 83,4 % environ.

10. Tête magnétique selon la revendication 7, dans laquelle ledit alliage de cobalt est sélectionné à partir de CoZrCr, CoZr, CoZrNb et CoZrMo.

11. Tête magnétique selon la revendication 8, dans laquelle les couches magnétiques (2, 2a, 2b) sont formées par déposition/placage d'alliage de NiFe et ensuite par recristallisation de la couche de NiFe.

12. Tête magnétique selon l'une quelconque des revendications précédentes, dans laquelle chacune des couches magnétiques supérieure et inférieure (2, 2a, 2b) est une couche unique d'un matériau magnétique.

13. Tête magnétique selon l'une quelconque des revendications précédentes, dans laquelle les couches magnétiques (2, 2a, 2b) sont formées afin de former une partie étroite avec un espace (6) à une extrémité du circuit magnétique pour interagir avec le support d'enregistrement, et dans laquelle ladite bobine (3) est enterrée dans une couche d'isolation (4) placée entre les couches magnétiques supérieure et inférieure.
